# EUROPEAN PATENT APPLICATION

(11) **EP 1 757 355 A1**
(43) Date of publication of application: **28.02.2007**
(21) Application number: 05730570.8
(22) Date of filing: 14.04.2005
(51) Int. Cl.: B01D 63/14, B01D 29/07

(54) **PLEATED-TYPE CARTRIDGE FILTER DEVICE**

(30) Priority: 15.04.2004 JP 2004120359
(71) Applicant: ENTEGRIS, INC., Chaska, MN 55318 (US)
(72) Inventor: KUWABARA, Hirokazu c/o Nihon Entegris K.K, Tokyo 1080073 (JP); KURATA, Koichi c/o Nihon Entegris K.K, Tokyo 1080073 (JP)
(74) Representative: Gambell, Derek
(86) International application number: PCT/JP2005/007263
(87) International publication number: WO 2005/099877

(57) **Abstract**

A cartridge filter device having high filtration efficiency, having a long filter life, and capable of being produced at low cost. An out-in-pass-type pleated cartridge filter device has a filtration material, a core, a sleeve, and two end caps (upper and lower lid sections). In a filter material cross-section orthogonal to pleat folding, there are one mountain folding line (a), two valley folding lines (b) on both sides of the one mountain folding line, and two mountain folding lines (c) on both sides of the two valley folding lines. Thus the cartridge filter device includes a letter W-shaped section where there are one low mountain section on the sleeve side, two valley sections on the core side, on both sides of the one mountain section, and two high mountain sections on the sleeve side, on both sides of the two valley sections.

## Description

### TECHNICAL FIELD

The present invention relates to a pleated type cartridge filter device having high filtration efficiency and a long filter life. More specifically, the present invention relates to a pleated type cartridge filter device having an increased filter area contributing to filtration and capable of being produced at low cost.

### BACKGROUND ART

The filters have been used to separate foreign matter/particles in a variety of fluids and demanded to be capable of catching target foreign matter/articles, used simply/easily and have a high holding capacity (accommodating capacity) for particles, that is, a function of a long service life. As such a filter, a pleated type filter in which unwoven cloth or film-like sheet (membrane) is folded in pleated fashion has been known. The pleated type filter has an advantage in that a large filtration area can be created.

The application field of the filter includes a variety of fields from a relatively simple one such as automobile oil, air filtration unit to precision one such as wafer cleaning and photo resist filtration for semiconductor device manufacturing, and filtration in medical field. In semiconductor field demanding a particularly precision filter, finer wiring width has been demanded as the degree of integration of LSI is raised in recent years and consequently, removal technology for removing very small foreign matter in manufacturing step of LSI patterning has been requested. The patterning is generally carried out by applying photo resist to a silicon wafer and using a difference of solubility to developing solution between an exposed portion and a non-exposed portion. If foreign matter is present on wafer or in resist solution, the patterning cannot be carried out at a designed width, thereby resulting in a failure. For example, even if there is left foreign matter of about 0.05 µm in photo resist solution after filtration, fault, wiring failure or the like may occur. However, because photo resist solution usually has a characteristic of generating gel easily due to accumulation or being left in a long period, gel is generated in the photo resist solution before the photo resist solution is applied to the silicon wafer and exposed to light (gel mentioned here is different from photosensitive substance which is altered partially in the photo resist). If such gel exists in the photo resist solution, insoluble foreign matter is left in a pattern to be solved by developing solution during exposure to light, of the photo resist film on a silicon wafer, thereby causing a pattern failure.

The filter material for removing the above-described ultra fine particles/foreign matter is very expensive and thus, it is preferable to save the usage amount of the filtration material within the range of a filtration area wide to an extent that clogging unlikely occurs in use. An area in which particles not passing a filter are actually deposited is referred to as effective filtration area.

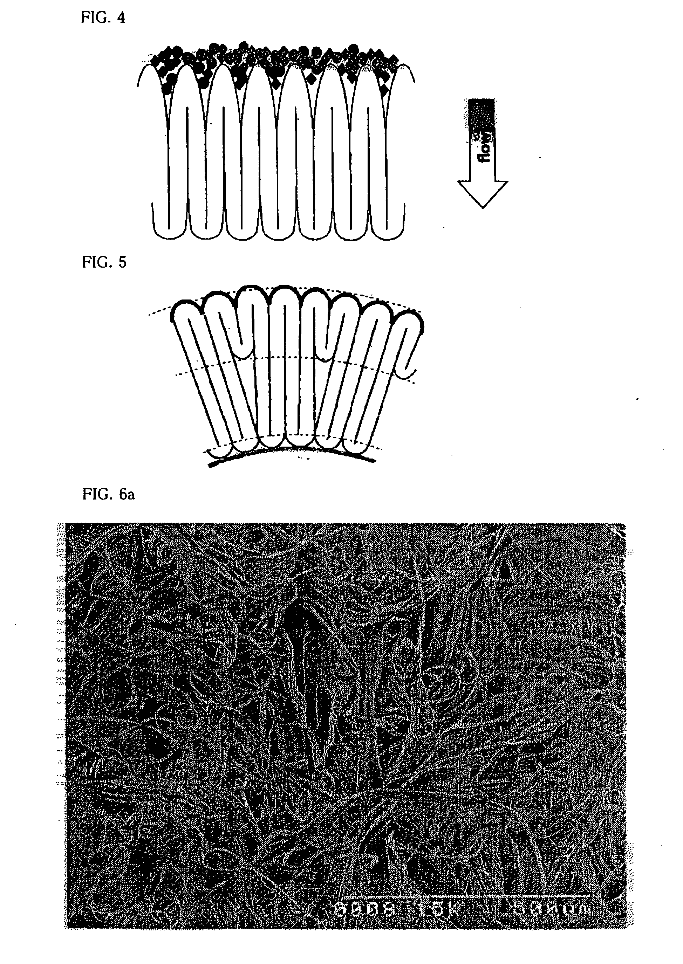

Usually, to increase the effective filtration area in order to extend a usable period (service life) by preventing clogging, the area of the filter material for use is increased. However, because ordinary pleated type folding is constituted of mountains having an equal height, the filter needs to be folded so closely that the side faces of the pleated type mountains come into contact with each other in order to increase the area of the filter material for use. FIG. 4 is a sectional view of an example of an ordinary pleated type filter, in which a filtration object fluid is supplied from the upstream of the Figure (or from outside) and the filtered liquid flows out to the downstream (or to the inside). In FIG. 4, the heights of the mountain folding lines and valley folding lines are constant each and all the valley folding lines are designed to make contact with the filtered liquid core. When fluid containing foreign matter is filtered by such a filter folded closely, particles not passing through the filter are deposited only on the top portion of the folded mountain so as to cause clogging. As a result, the folded portion does not function effectively (effective filtration area is small), thereby reducing the service life of the filter (see FIG. 4).

As a modification of ordinary pleat folding in the out-in-pass type pleat folded filtration material, such a structure in which the mountain folding line of the top portion of part of mountains opposing the sleeve is converted to letter V-shaped valley folding to form letter M-shaped configuration while the heights of all the mountain top portions are set constant has been proposed (for example, patent document 1). According to the filtration material of the patent document 1, when uniform pleating is carried out in a cylindrical filter material, the inner peripheral side (core side) is made dense while the outer peripheral side (sleeve side) is made coarse to aim at a structure which increases the filter material area for use by making effective use of necessarily generated space on the outer peripheral side (see FIG. 5). Therefore, in the filtration material of the patent document 1, the filter is folded further closely because both the inner peripheral side and the outer peripheral side are made dense, so that the effective filtration area becomes smaller.

Patent document 1: Japanese Utility Model Application Laid-Open No.62-87710

### DISCLOSURE OF THE INVENTION

### PROBLEM TO BE SOLVED BY THE INVENTION

As described above, methods of saving the area of a filter material for use by increasing the effective filtration area have been demanded and such an object needs to be accomplished without changing the outer dimensions because outer dimensions such as the sleeve outside diameter and height of the filter device are set with compatibility.

### PROCEDURE TO SOLVE THE PROBLEM

The present invention relates to so-called an out-in-pass type cartridge filter device comprising: a substantially cylindrical filtration material obtained by folding a square filter material into a pleated fashion and bonding together both ends parallel to the pleat folding of the filter material; a core (porous inner cylinder); sleeve (porous outer cylinder); and two end caps (upper and lower lid portions), in which the filtration material is inserted in between the core and the sleeve and nipped by upper and lower end caps and the upper and lower ends thereof are fused with heat to the end caps liquid-tightly, the cartridge filter device allowing filtration object fluid to flow from the sleeve side to the core side, the cartridge filter device further including a letter W-shaped section in which a mountain folding line (a) exists in a filter material section orthogonal to pleat folding, followed by two valley folding lines (b) on both sides thereof and two mounting folding lines (c) on both sides thereof, so that a low mountain portion is formed on the sleeve side, followed by two valley portions on the core side on both sides thereof and two high mountain portions on the sleeve side on both sides thereof.

It is preferred that a support material is used on at least a single face of the filter material.

It is preferred that a ratio (A/B) of an interval A (mm) between a mountain folding portion (a) which forms the low mountain portion and a valley portion (b) to an interval B (mm) between the valley portion (b) which forms the high mountain portion and a mountain folding portion (c) is 0.3 or more to less than 1.

It is preferred that the outside diameter D (mm) of the core and a total number n of the valley folding lines of the filter material to the total thickness t (mm) of the filter material and support material have a relation of n = (πD/2t) × (1.1~1.9).

In the meantime, the "height of the mountain" refers to a distance from the mountain folding line to an intersection point between a line dropped vertically from the mountain folding line and a line connecting valley folding lines adjacent on both sides in a section of a filter perpendicular to the pleat folding with the filtration material accommodated. A line passing all the valley folding portions in the filter section perpendicular to the pleat folding with the filtration material accommodated draws a circle around the core.

### ADVANTAGE OF THE INVENTION

Because the filter of the pleated type cartridge filter device of the present invention includes a low mountain between a high mountain and another high mountain, the filter area contributing to filtration is increased relative to the conventional technology. According to a related art, a filter having an area as large as possible needs to be accommodated in the filter device in order to increase the filter area. However, the present invention can obtain a high filtration efficiency and a long filter service life with an unexpectedly small filtration area (small filling quantity). Further, the amount of the filter material for use may be reduced because of the excellent filtration efficiency so that raw material cost is dropped and additionally, operation for pleating processing per filtration material is also reduced, thereby shortening manufacturing time.

### BEST MODE FOR CARRYING OUT THE INVENTION

The filtration material of the present invention may be any material as long as it has pores having a desired size depending on the size of foreign matter which should be removed in treatment liquid, and although filter films having fine pores 0.05 to 0.2 µm, composed of Polytetrafluoroethylene (hereinafter referred to as PTFE), polyethylene, polypropylene, SUS, nylon, polytetrafluoroethylene-perfluoroalkylvinyl ether (hereinafter referred to as PFA), polyvinylidene-fluoride (PVDF) are used in order to filter, for example, photo resist solution, the filtration material is not restricted to these materials. When chemical solution for use in manufacturing of semiconductor device such as rinse agent for silicon wafer is filtered, filter film composed of the above mentioned material having fine pores 0.05 to 1.0 µm is used.

The thickness of the filter material is, for example, 0.1 to 2.0 mm in case of resin base material. Some filter materials have a low bending stiffness even if the thickness is less than 0.5 mm and thus, increase of pressure due to buckling of the filter is prevented by using support material. If the thickness exceeds 2.0 mm, not only pleating becomes very difficult but also the upper limit of the filter material area for use is restricted so that the effective filtration area is reduced thereby a target performance not being achieved.

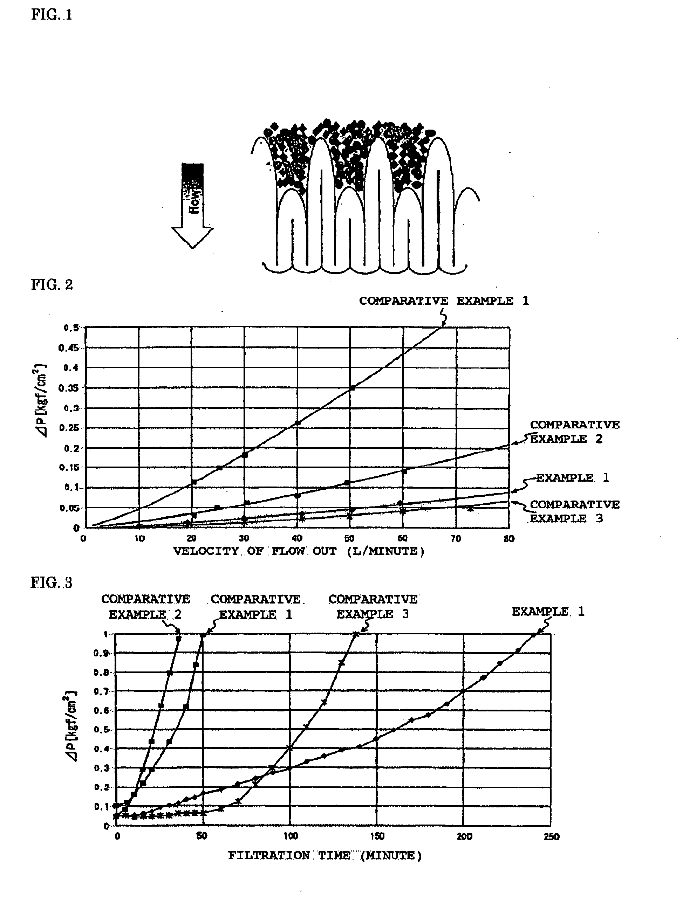

The filtration material of the present invention is pleat-folded so that a mountain folding line a exists in the section of the filter material orthogonal to the pleat folding, followed by two valley folding lines b on both sides thereof and two mounting folding lines c on both sides thereof. Consequently, a low mountain portion is formed on the sleeve side, followed by two valley portions on the core sides on both sides thereof and two high mountain portions on the sleeve side on both sides thereof thereby producing a letter W-shaped portion. FIG. 1 is a schematic sectional view orthogonal to pleat folding, which is an example of the filter used in the present invention and all the valley folding lines keep contact with the core. On the other hand, the height of the mountain changes vertically and the mountain folding line of the high mountain approaches the sleeve on the fluid supply side most. A repetition unit of the pleat folding in FIG. 1 is comprised of a high mountain and a low mountain. When fluid containing particles is filtered with a filter having this structure, its folded filter portion functions effectively to perform filtration and filtered particles can be deposited on the low mountain existing between two high mountains, thereby prolonging a time (filter service life) until the filter is clogged to disable the usage.

The height of the mountain may change regularly vertically or vertically at random. For example, the repetitive unit of the pleat folding is constituted of two mountains, "high" and "low" in its height or three or four mountains, "high, low, and high" or "high, low, low, and high".

Because the pleat folded filter of the present invention allows filtered particles to be deposited between the high mountain and the low mountain and part of the folded portion is exposed, the effective filtration area is large and the filtration efficiency is improved, thereby prolonging the service life of the filter (see FIG. 1).

In the filter of the present invention, a high stiffness (shape holding characteristic) blocking it from being buckled when an end cap is fused can be secured by raising the density of the pleat folding. However, because the filtration efficiency is high, the quantity of consumption of the filter material can be saved by lowering the density of the pleat folding while securing a folding ease and a high stiffness (shape holding characteristic) using a support material.

A difference between the high mountain and the low mountain depends on a condition as described above. Preferably, a ratio (A/B) of an interval A (mm) between a mountain folding portion (a) forming the low mountain portion and a valley folding portion (b) to an interval B (mm) between the valley folding portion (b) forming the high mountain portion and the mountain folding portion (c) is 0.3 or more to less than 1. Within this range, the low mountain has a height, which is smaller than the high mountain and enables it to be a support for reinforcement in holding the filtration material configuration without making contact with the sleeve. As a result, there is achieved an advantage that the filter service life (filtration volume until a differential pressure between supply and discharge reaches a predetermined value) is prolonged without reducing the filtration efficiency.

The pleat of the present invention can be produced easily by setting to ordinary pleat processing such as reciprocating type, high-speed rotary type in case of resin base material.

Preferably, the total thickness t (mm) of the filter material and support material of the present invention has a relation of n = (πD/2t) × (1.1 ~ 1.9) between the outside diameter D (mm) of a core for use and the quantity n of the valley folding lines in the filter material because the thickness of a mountain or valley is 2t and more preferably, n = (πD/2t) × (1.3~1.8). The above-mentioned total thickness t (mm) is a total value of the thickness of the filter material and support material (if used) in conditions in which no force like a pressure is applied. If n is less than (πD/2t) × 1.1, it is likely to be buckle, therefore it is not available for actual use. On the other hand, if n exceeds (πD/2t) × 1.9, the filter filling density is raised so that its effective filtration area narrows thereby unlikely securing an excellent advantage of the present invention.

The interval A (mm), interval B (mm) and the total thickness t (mm) have a relation of t < A < B.

In the filtration material of the present invention, the support material may be used on at least one face or both faces of the filter material and for example, the filtration material may be folded into a pleated configuration after a pair of support material is provided on each of both faces of the filter material and both side edges thereof may be bonded. As the support material, ordinarily used material such as mesh, unwoven fabric may be used. By using the support material, the bending stiffness of an entire filter can be raised to improve the shape holding characteristic.

The support material is used in the form of net, porous sheet or unwoven fabric and for example, preferably, PFA, PTFE, tetrafluoroethylene-ethylene copolymer (hereinafter referred to as ETFE), thermoplastic fluorine resin such as PVDF, polyethylene, polypropylene, SUS and the like are used.

A square filter material of the present invention is folded into a pleat configuration and a substantially cylindrical filtration material obtained by bonding together both ends parallel to the pleat folding of the filter material is inserted in between the core and the sleeve. The upper and lower end portions of the filtration material are nipped by upper and lower end caps and fused together with heat liquid-tightly and then, this filtration material is accommodated in the cartridge filter unit.

The cartridge filter device of the present invention can be used in out-in-pass type cartridge filter device. When fluid passes through the pleated type filter, the high mountain portion surrounding the low mountain portion in fluid supply direction serve as each opening to catch particles and/or foreign matter contained in fluid effectively, so that the exposed surface of the filter can be used sufficiently.

In case of resin base material, a number of the kinds of the support materials on the fluid supply side (primary side) are available by selecting a combination of the support materials capable of holding the mountain (high, low) configuration of the pleat when pleated or after pleated.

The cartridge filter device can be used for any of liquid and gas as fluid.

### EXAMPLES

### Example 1

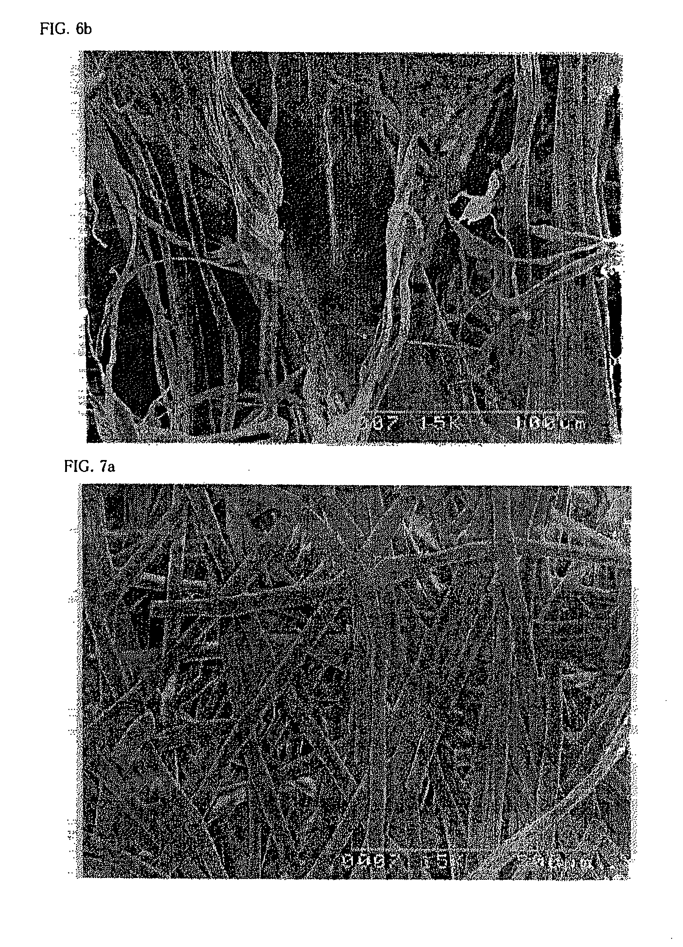

To assemble a cartridge filter device (sleeve inside diameter 76 mm, core outside diameter 46 mm), PFA made double cloth net (fiber diameter 0.22 mm) 450 µm in thickness as a primary side (fluid supply side) support material and PFA made thick net (fiber diameter 0.11 mm) 220 µm in thickness as a secondary side (fluid discharge side) support material were overlaid on polytetrafluoroethylene (PTFE manufactured by DAIKIN KOGYO) unwoven fabric having film area 7,022 m² with a structure shown in FIG. 6, having a coating weight of 250g/m² (400 µm in thickness), then pleated by repeating the repetitive unit comprised of 15 mm mountain/12 mm mountain/15 mm mountain (a repetitive unit comprised of high, low, high) so as to produce totally 114 mountains (76 mountains each 15 mm in height, 38 mountains each 12 mm in height), and both side edges thereof were bonded together to produce a filtration material. A/B = 0.8. n = 114 = [46π/{2 × (0.4 + 0.45 + 0.22)}] × 1.69.

### Comparative Example 1

In a cartridge filter device assembled here, the PTFE unwoven fabric film area 14,520 cm² of the example 1 was pleated with 15 mm mountains all so as to produce 220 folded mountains (mountain height 15 mm) as a filter. A/B = 1. n = 220 = {46π/(2 × 0.4)} × 1.22.

### Comparative Example 2

To assemble a cartridge filer device of this example, PFA made thin net (fiber diameter: 0.08 mm) 150 µm in thickness was overlaid to the PTFE unwoven fabric having film area of 12,300 cm² as the primary side support material and the secondary side support material, then pleated with 15 mm mountains all so as to produce totally 187 mountains (15 mm in height) and both side edges thereof were bonded together so as to prepare a filtration material. A/B = 1. n = 187 = [46π/{2 × (0.4 + 0.15 + 0.15)}] × 1.81.

### Comparative Example 3

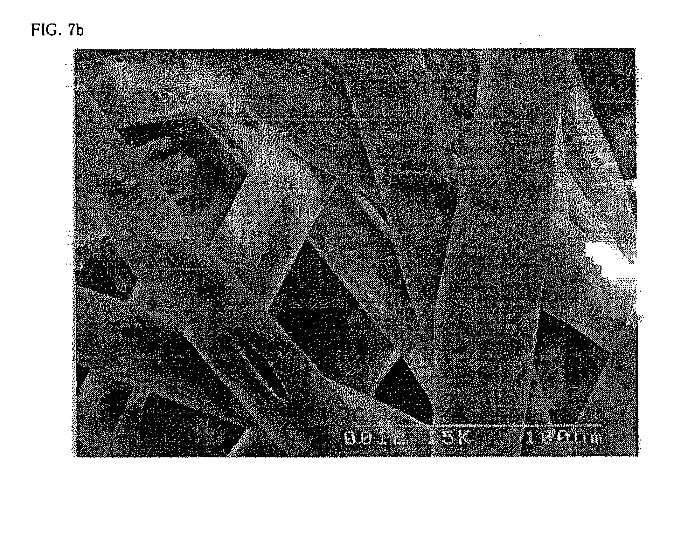

In the marketed cartridge filter device (manufactured by Mykrolis Corporation, product name: Fluorogard PRS Filter) for use, the PTFE unwoven fabric having film area of 14,000 cm² with a structure shown in FIG. 7, having a coating weight of 250 g/m² (400 µm in thickness) was pleated with 15 mm mountains all so as to have totally 213 mountains (15 mm in height). A/B = 1. n = 213 = {46π/(2 × 0.4)} × 1.18.

### FILTER PERFORMANCE EVALUATION

In the filter device of Example 1 and Comparative Examples 1 to 3 using a filter having a coating weight of 250 g/cm², two kinds of refined water containing JIS class 8 dust (particle diameter: 1 µm or 5 µm) at a concentration of 100 ppm was used as fluid and each flow velocity was measured at supply pressure of 0.05 kgf/cm² and 0.1kgf/cm² and then, their service lives (filtration volume until a differential pressure between supply and discharge reaches 1 kgf/cm²) and particle removal performance (trapping efficiency; retention) was measured. Its result is shown in Table 1. FIG. 2 shows changes of the velocity of flow out from the filter device when the supply pressure is changed to 0 to 0.5 kgf/cm² (water temperature: 25°C) and FIG. 3 shows changes of filtration time (water temperature: 22°C, flow out velocity: 10L/minute).

Example 1 has a practically available particle removal performance and its flow-out velocity under a supply pressure and its service life were very excellent.

In Comparative Example 1, the same filter as Example 1 having about double area was pleated in a conventional manner in order to prevent it from being buckled (pleat folding number: about twice) without using support material. Although the particle removal performance was improved more than the example 1, the flow-out velocity to the supply pressure and service life dropped considerably so that this was not durable to actual usage. The reason is that the folding density is so high and the effective filtration area is decreased so that fluid and particle contained therein cannot pass through.

Comparative Example 2 secures a shape holding performance by using the same filter as Comparative Example 1 together with the support material and the filter area and folding number are set smaller than Comparative Example 1. However, because the filter was folded tightly due to existence of the support material, the velocity of flow out to the supply pressure and the service life were not durable to actual usage although they were improved relative to Comparative Example 1.

In Comparative Example 3, a filter having different pore diameter from Example 1 was used without any support material and a filter area and pleat folding number both twice Example 1 were used by raising the density of the pleat folding in order to secure a shape holding performance. Although in Comparative Example 3, the velocity of flow out to a supply pressure is higher than Example 1 because the filter pore diameter is larger, the particle removal performance is very low and the effective filtration area is narrow and the service life is half because it was pleated in the ordinary way.

**[Table 1]**

| | | EXAMPLE 1 | COMPARA TIVE EXAMPLE 1 | COMPARA TIVE EXAMPLE 2 | COMPARA TIVE EXAMPLE 3 |
|---|---|---|---|---|---|
| FILTER | COATING WEIGHT (g/cm²) (THICKNESS) | 250 (400 µm) | 250 (400 µm) | 250 (400 µm) | 250 (400 µm) |
| | USAGE FILTER AREA (cm²) | 7022 | 14520 | 12300 | 14000 |
| | PRIMARY SIDE SUPPORT MATERIAL | DOUBLE CLOTH NET (450 µm) | NONE | THIN NET (150 µm) | NONE |
| | SECONDARY SIDE SUPPORT MATERIAL | THICK NET (220 µm) | NONE | THIN NET (150 µm) | NONE |
| | PLEAT FOLDING NUMBER | 114 | 220 | 187 | 213 |
| | A/B | 0.8 | 1 | 1 | 1 |
| | (n×2t)/πD | 1.69 | 1.22 | 1.81 | 1.18 |
| FLOW OUT VELOCIT Y (L/MINUT E) | WORKING PRESSURE 0.05 (kgf/cm²) | 55 | 12 | 25 | 73 |
| | WORKING PRESSURE 0.1 (kgf/cm²) | 83 | 20 | 47 | 98 |
| SERVICE LIFE (FILTRATION VOLUME: L) | | 2400 | 500 | 365 | 1380 |
| PARTICLE REMOVAL PERFORMANCE OF 5 µm DIA. DUST(%) | | 95 | 93 | 96 | 24 |

### BRIEF DESCRIPTION OF THE DRAWINGS

FIG. 1 is a schematic sectional view of a filter on use showing an example of the present invention.
FIG. 2 is a graph showing changes of the velocity of flow out from a filter device when supply pressure is changed.
FIG. 3 is a graph showing changes of filtration time of the filter device with the flow amount set constant.
FIG. 4 is a schematic sectional view of an example of a conventional filter.
FIG. 5 is a schematic sectional view of another example of the conventional filter.
FIG. 6a is a microscopic photograph (100 magnifications) of a filter material used in Example 1.
FIG. 6b is a microscopic photograph (500 magnifications) of the filter material used in Example 1.
FIG. 7a is a microscopic photograph (100 magnifications) of the filter material used in Comparative Example 3.
FIG. 7b is a microscopic photograph (500 magnifications) of the filter material used in Comparative Example 3.

## Claims

1. An out-in-pass type cartridge filter device comprising: a substantially cylindrical filtration material obtained by folding a square filter material into a pleated fashion and bonding together both ends parallel to the pleat folding of the filter material; a core (porous inner cylinder); sleeve (porous outer cylinder); and two end caps (upper and lower lid portions), in which the filtration material is inserted in between the core and the sleeve and nipped by upper and lower end caps and the upper and lower ends thereof are fused with heat to the end caps liquid-tightly, the cartridge filter device including a letter W-shaped section in which a mountain folding line (a) exists in a filter material section orthogonal to pleat folding, followed by two valley folding lines (b) on both sides thereof and two mounting folding lines (c) on both sides thereof, so that a low mountain portion is formed on the sleeve side, followed by two valley portions on the core side on both sides thereof and two high mountain portions on the sleeve side on both sides thereof.

2. The cartridge filter device according to Claim 1, wherein the support material is used on at least a single face of the filter material.

3. The cartridge filter device according to Claim 1 or 2, wherein a ratio (A/B) of an interval A (mm) between a mountain folding portion (a) which forms the low mountain portion and a valley portion (b) to an interval B (mm) between the valley portion (b) which forms the high mountain portion and a mountain folding portion (c) is 0.3 or more to less than 1.

4. The cartridge filter device according to any one of Claims 1 to 3, wherein the outside diameter D (mm) of the core and a total number n of the valley folding lines of the filter material to the total thickness t (mm) of the filter material and support material have a relation of n = (πD/2t) × (1.1~1.9).
